# EUROPEAN PATENT SPECIFICATION

(11) **EP 2 463 071 B1**
(45) Date of publication and mention of the grant of the patent: **25.09.2013**
(21) Application number: 10380147.8
(22) Date of filing: 10.12.2010
(51) Int. Cl.: B29B 17/00, B29B 17/04

(54) **Method for processing Tetra-pak containers wastes for manufacturing plastic pieces**
Verfahren zur Verarbeitung von Abfallstoffen von Tetra-Pak-Behältern zur Herstellung von Kunststoffteilen
Procédé de traitement des déchets de conteneurs Tetra-pak afin de fabriquer des pièces en plastique

(43) Date of publication of application: 13.06.2012
(73) Proprietor: SP Kloner Ecotec S.L., 46960 Aldaia Valencia (ES)
(72) Inventor: Campos Beceiro, Alberto, 46960 ALDAIA (VALENCIA) (ES)
(74) Representative: Ungria López, Javier

(56) References cited:
- EP-A1- 1 776 006
- EP-A1- 2 123 418
- KR-A- 20100 052 004

## Description

### OBJECT OF THE INVENTION

The present invention, as it is expressed in the statement of the present specification, is related to a method for processing tetra-pak containers wastes for manufacturing plastic pieces.

Tetra-pak containers, as conventionally occurs, are firstly sent to a paper production plant where most of the cellulose from the tetra-pak containers is extracted, remaining some wastes with an approximate composition of 4% cellulose, 78% low density polyethylene (LDPE) and 18% aluminium.

Starting from these resulting wastes, the aim of the invention is to make use of such wastes by a characteristic procedure for manufacturing plastic material pieces with them, which in addition to including such tetra-pak containers wastes as a base, include other additional components in order for the obtained pieces to have the necessary strength and stiffness, as well as other relevant characteristics. Also included are some components for facilitating the whole process.

### BACKGROUND OF THE INVENTION

Tetra-pak containers have an approximate composition as indicated in the following:
· 75% cellulose.
. 20% low density polyethylene.
. 5% aluminium.

Currently, these containers are collected as urban wastes by the recycling skip system and are sent to paper production plants where most of the cellulose is extracted, and wherein an approximate composition as indicated in the following is left:
. 4% cellulose.
. 78% low density polyethylene (LDPE).
. 18% aluminium.

This waste must be put away at a rubbish tip, since its processing as recycled plastic is very difficult due to the following problems:
· very low fluidity (melt flow index between 0.5 and 1.5)
· Low density polyethylene causing a lack of stiffness and breaking strength in the injected pieces.
· Aluminium particles with a mean size higher than 1 mm fragilizing the obtained pieces.
· Presence of 4% residual cellulose that makes it difficult to clean with water, a subsequent expensive drying while breaking down from a temperature of 190°C during its injection or extrusion processing.

EP2123418 Al discloses a method for recycling composite material formed from cellulose, plastics material and aluminium and obtained by a pulping process. Specifically, the composite material is Tetra-pak, which is firstly washed with water for reducing cellulose.

KR20100052004 A discloses a waste plastic film dry type hot air washing apparatus to increase regeneration efficiency of the waste plastic film by easily eliminating foreign materials remaining on the surface of a washed waste plastic film.

### DESCRIPTION OF THE INVENTION

With the purpose of achieving the objectives and avoiding the drawbacks mentioned in the previous sections, the invention proposes a new method for processing tetra-pak containers wastes for manufacturing plastic pieces.

As it has been previously mentioned, those wastes are the wastes obtained after processing the tetra-pak containers in a paper production plant where most of the cellulose of such containers is extracted, said wastes comprising an approximate composition containing: 4% cellulose, 78% low density polyethylene (LDPE) and 18% aluminium.

The method is characterized in that it comprises a process for obtaining a granulate from the tetra-pak wastes suitable for being processed in an injection machine consisting of the following stages:

A first stage of wastes pre-treatment.

In this first stage a tearing of the bales of the wastes material in standard mills is carried out until obtaining a particle size between 0.5/4 cm² and preferably between 1 and 2 cm².

A second pre-treatment stage wherein impurities, organic wastes and dust cleaning are carried out. The torn waste is cleaned with waterless wash systems, by mean of hot air streams. These equipments remove approximately 50% of residual cellulose leaving its ratio at approximately 2% of the total.

A third granulate pre-treatment stage.

In this third stage the already clean wastes can be granulated by extrusion taking into account that the extrusion screw must have a cutting section allowing reducing the particle size of the aluminium containing the wastes up to a size of 0.1 to 0.6 mm, preferably between 0.1 and 0.2 mm.

The wastes can also be granulated in a standard agglomeration device if it is previously grounded in a knives fine mill for carrying out a first size reduction of the aluminium particles up to approximately 0.5 to 1 mm. The granulating apparatus should be guaranteed to have a previous wastes homogenization step by means of mixing elements and that in subsequent processing steps, the injection screws are provided with cutting elements.

It is also convenient in this step to measure out all the additive components required by this material in its subsequent process, namely the use between 2 and 10% of internal lubricants suitable for polyolefins such as metal stearates, paraffin waxes, amide waxes, ester waxes, fat acid esters and preferably polyolefin waxes and more preferably polyethylene waxes are recommended.

Moreover and for pieces that should have a higher mechanical strength the use of adhesion polymers between the aluminium and the polymeric matrix at a ratio of between 1 and 5%, more preferably between 2 and 3% as the following polymers is recommended:
· Polyethylene, polypropylene polymers containing grafted polar groups or mixtures thereof.
· Ethylene and acrylic or methacrylic acid copolymers.
· Ethylene and acrylates or acetates copolymers.
· Glycidyl methacrylate derivatives.
· Styrene-ethylene-butadiene-styrene (SEBS) copolymers containing grafted polar groups.

In a more preferred embodiment, the grafted polar groups are maleic anhydride or acrylic acid. In an even more preferred embodiment, the grafted polar groups are at a ratio less than 15% by weight with respect to the adhesive polymer.

In another preferred embodiment, the grafted polar group is maleic anhydride and it is at a ratio less than 5% by weight of the adhesive polymer. In an even more preferred embodiment the maleic anhydride ratio is less than 3% by weight.

In another preferred embodiment, the grafted polar group is acrylic acid and it is at a ratio less than 7% by weight of the adhesive polymer.

Also in this step and according to the properties of the piece to be injected, we can also substantially improve the stiffness of the polymer by adding HDPE (high density polyethylene) between 15 and 40% which can also be obtained from bottles or containers, cans or carafes recycling. HDPE at a sufficient ratio forms an interpenetrated crystal lattice with the crystal lattice of the low density polyethylene (LDPE), obtaining a stiffness equivalent to that of HDPE with a similar elastic modulus, of 0.7 to 1 GPa in contrast to the elastic modulus of the wastes which has values close to the elastic modulus of LDPE, between 0.2 and 0.4 Gpa.

Another possibility is improving the stiffness of the adhesive polymer by adding high density polyethylene (HDPE) between 15 and 50% for achieving an increase of the elastic modulus of the plastic injection moulding from 0.2/0.4 GPa to 0.7/0.9 Gpa.

Another possibility is improving the stiffness of the adhesive polymer by adding high density polyethylene (HDPE) between 20 and 30% for achieving an increase of the elastic modulus of the plastic injection moulding from 0.2/0.4 GPa to 0.7/0.9 Gpa.

A fourth injection/compression stage wherein the granules of material obtained with the waste cannot be injected in a standard injection machine since they have a melt flow index between 0.5 and 1.5. And also because during the flow of the melted waste through the washing channels, as a result of the friction against the walls of the mold and the machine, their components separate observing frequent accumulation of aluminium in the injected piece when flow lengths are long.

On the other hand, temperatures higher than 190°C or residence times at temperatures between 150 and 190°C higher than 2 minutes produce breakdown of the remaining cellulose in the wastes and the appearance of carbonized cellulose spots and burned cellulose strong smells.

However, they can be processed with the following procedure forming part of the invention that concerns us:
· Injection/compression system:
   the waste is injected-with the mold open taking care of injecting the exact amount of wastes for the piece to be manufactured. It is injected through a single channel with a material flow cross-section proportional to the weight of the piece to be obtained. Once the material has been injected the mold is closed compressing the material, thus ending the molding of the piece using the closing force of the machine.

The used molds include short injection channels, wall thicknesses higher or equal to 5 mm and also short flow lengths.

A previous treatment of molecular chain mechanical excision is also envisaged.

On the other side we can apply to the waste a selective molecular excision pre-treatment by a cavitational dynamic mixer. This treatment applied immediately after the extrusion of the waste increases its melt flow index from 0.5 to -10, which makes the wastes able to be directly processed in a standard injection machine.

Particularly in a first example a broom block such as it is described in the following can be obtained:
· Tetra-pak containers wastes after cellulose has been recovered in a paper mill.
· Tearing process in a hammer mill.
· Waterless wash process in a centrifuge cleaner.
· Agglomeration process in an agglomeration device where 2% polyethylene wax and 25% HDPE recycled from detergent bottles is added.
·Injection process by injection/compression in a suitable machine.

In a second example a community trash can, such as it is described in the following can be obtained:
· Tetra-pak containers wastes after cellulose has been recovered in a paper mill.
· Tearing process in a hammer mill.
· Waterless wash process in a centrifuge cleaner.
· Agglomeration process in an agglomeration device where 2% polyethylene wax and 2% adhesive polymer is added.
· Injection process by injection/compression in a suitable machine.

Among others, the pieces that can be manufactured with the new method of the invention are the following:
· Street furniture, such as fences, pillars, flower beds, etc.
· Transport pallets.
· Broom blocks.
· Community cans.
· Clothes hangers.
· Linen baskets.
· Garden flowerpots, plates and flower beds.

## Claims

1. **METHOD FOR PROCESSING TETRA-PAK CONTAINERS WASTES FOR MANUFACTURING PLASTIC PIECES,** those wastes comprising an approximate composition of 4% cellulose, 78% low density polyethylene (LDPE) and 18% aluminium, comprising:
· a first step wherein the wastes are washed;
· a second step wherein the already washed wastes are reduced to pieces of small dimensions,
· a third step wherein different additive components necessary for subsequent steps are added to the cut up wastes;
· a fourth granulation step wherein the mixture is homogenized using a machine that reduces the size of the previous cut up wastes to some tiny granules;
· a fifth step wherein the mixture of tiny granules and additive components is subjected to an injection/compression process for obtaining the plastic material pieces;
**characterized in that** the wastes are washed by a system that does not use water, or other liquid products, wherein cellulose is reduced to a great extent.

2. **METHOD FOR PROCESSING TETRA-PAK CONTAINERS WASTES FOR MANUFACTURING PLASTIC PIECES,** according to claim 1, wherein the additive components comprise the use of:
· 2 to 10% of internal lubricants suitable for polyolefins such as metal stearates, paraffin waxes, amide waxes, ester waxes, fat acid esters and preferably polyolefin waxes and more preferably polyethylene waxes:
· adhesive polymers between the aluminium and the polymeric matrix.

3. **METHOD FOR PROCESSING TETRA-PAK CONTAINERS WASTES FOR MANUFACTURING PLASTIC PIECES,** according to claim 2, wherein the adhesive polymers comprise:
· Polyethylene, polypropylene polymers containing grafted polar groups or mixtures thereof;
· ethylene and acrylic or methacrylic acid copolymers;
·ethylene and acrylates or acetates copolymers;
· glycidyl methacrylate derivatives and
· styrene-ethylene-butadiene-styrene (SEBS) copolymers containing grafted polar groups.

4. **METHOD FOR PROCESSING TETRA-PAK CONTAINERS WASTES FOR MANUFACTURING PLASTIC PIECES,** according to any one of claims 2 or 3, wherein the adhesive polymers between the aluminium and the polymeric matrix reach a ratio between 1 and 5%.

5. **METHOD FOR PROCESSING TETRA-PAX CONTAINERS WASTES FOR MANUFACTURING PLASTIC PIECES,** according to any one of claims 2 or 3, wherein the adhesive polymers between the aluminium and the polymeric matrix reach a ratio between 2 and 3%.

6. **METHOD FOR PROCESSING TETRA-PAX CONTAINERS WASTES FOR MANUFACTURING PLASTIC PIECES,** according to claim 3, wherein the grafted polar groups comprise maleic anhydride.

7. **METHOD FOR PROCESSING TETRA-PAK CONTAINERS WASTES FOR MANUFACTURING PLASTIC PIECES,** according to claim 3, wherein the grafted polar groups comprise acrylic acid.

8. **METHOD FOR PROCESSING TETRA-PAK CONTAINERS WASTES FOR MANUFACTURING PLASTIC PIECES,** according to any one of claims 3 to 7, wherein the grafted polar groups are at a ratio of less than 15% by weight with respect to the adhesive polymer.

9. **METHOD FOR PROCESSING TETRA-PAK CONTAINERS WASTES FOR MANUFACTURING PLASTIC PIECES,** according to claim 3, wherein the grafted polar group is maleic anhydride with a ratio of less than 5% by weight of the adhesive polymer.

10. **METHOD FOR PROCESSING TETRA-PAK CONTAINERS WASTES FOR MANUFACTURING PLASTIC PIECES,** according to claim 3, wherein the grafted polar group is maleic anhydride with a ratio of less than 3% by weight of the adhesive polymer.

11. **METHOD FOR PROCESSING TETRA-PAK CONTAINERS WASTES FOR MANUFACTURING PLASTIC PIECES,** according to claim 3, wherein the grafted polar group is acrylic acid with a ratio of less than 7% by weight of the adhesive polymer.

12. **METHOD FOR PROCESSING TETRA-PAK CONTAINERS WASTES FOR MANUFACTURING PLASTIC PIECES,** according to any one of claims 2 to 11, wherein the stiffness of the adhesive polymer is improved by adding high density polyethylene (HDPE) between 15 and 50% for achieving an increase of the elastic modulus of the plastic injection moulding from 0.2/0.4 GPa to 0.7/0.9 Gpa.

13. **METHOD FOR PROCESSING TETRA-PAK CONTAINERS WASTES FOR MANUFACTURING PLASTIC PIECES,** according to any one of claims 2 to 11, wherein the stiffness of the adhesive polymer is improved by adding high density polyethylene (HDPE) between 20 and 30% for achieving an increase of the elastic modulus of the injected pieces from 0.2/0.4 GPa to 0.7/0.9 Gpa.

14. **METHOD FOR PROCESSING TETRA-PAK CONTAINERS WASTES FOR MANUFACTURING PLASTIC PIECES,** according to any one of the previous claims, wherein the injection/compression process for obtaining the plastic material pieces comprises:
· a first stage wherein the material is injected in an open mold taking care of injecting the exact amount of material for the plastic piece to be obtained;
· a second stage wherein once the material has been injected the mold is closed ending the molding of the plastic piece by compression of the material using the closing force of the machine.

15. **METHOD FOR PROCESSING TETRA-PAK CONTAINERS WASTES FOR MANUFACTURING PLASTIC PIECES,** according to claim 14, wherein the material is injected through a single channel with a material flow cross-section proportional to the weight of the piece to be obtained.

16. **METHOD FOR PROCESSING TETRA-PAR CONTAINERS WASTES FOR MANUFACTURING PLASTIC PIECES,** according to claim 1, wherein the granules resulting from the fourth step reach a size between 0.1 and 0.6 mm.

17. **METHOD FOR PROCESSING TETRA-PAK CONTAINERS WASTES FOR MANUFACTURING PLASTIC PIECES,** according to claim 1, wherein the granules resulting from the fourth step reach a size between 0.1 and 0.2 mm.

18. **METHOD FOR PROCESSING TETRA-PAR CONTAINERS WASTES FOR MANUFACTURING PLASTIC PIECES,** according to claim 1, wherein the machine mentioned in the fourth step that mixes and reduces the wastes, is an extruder machine, the extrusion screw of which has a cutting section reducing the size of the wastes.

19. **METHOD FOR PROCESSING TETRA-PAK CONTAINERS WASTES FOR MANUFACTURING PLASTIC PIECES,** according to claim 1, wherein the machine mentioned in the fourth step that mixes and reduces the wastes, is an agglomeration device deceiving wastes with sizes between 0.5 and 1 mm.

20. **METHOD FOR PROCESSING TETRA-PAK CONTAINERS WASTES FOR MANUFACTURING PLASTIC PIECES,** according to claim 1, wherein in a step subsequent to the fourth step a selective molecular excision pre-treatment increasing the melt flow index from 0.5 to 10 is applied.

21. **METHOD FOR PROCESSING TETRA-PAK CONTAINERS WASTES FOR MANUFACTURING PLASTIC PIECES,** according to claim 20, whererin the selective molecular excision pre-treatment is carried out by a cavitational dynamic mixer.

22. **METHOD FOR PROCESSING TETRA-PAK CONTAINERS WASTES FOR MANUFACTURING PLASTIC PIECES,** according to claim 1, wherein the wash system described in the first step consists of hot air streams.

## Patentansprüche

1. Verfahren zum Verarbeiten von Abfallstoffen von Tetra-Pak-Behältern zum Herstellen von Kunststoffteilen, wobei diese Abfallstoffe eine ungefähre Zusammensetzung aus 4 % Cellulose, 78 % Polyethylen niedriger Dichte (LDPE) und 18 % Aluminium umfassen, umfassend:
• einen ersten Schritt, in dem die Abfallstoffe gewaschen werden;
• einen zweiten Schritt, in dem die bereits gewaschenen Abfallstoffe zu Teilen mit kleinen Abmessungen zerkleinert werden,
• einen dritten Schritt, in dem verschiedene Zusatzkomponenten, die für die nachfolgenden Schritte erforderlich sind, zu den in Stücke geschnittenen Abfallstoffen zugegeben werden;
• einen vierten Granulierungsschritt, in dem die Mischung unter Verwendung einer Maschine homogenisiert wird, welche die Größe der zuvor in Stücke geschnittenen Abfallstoffe zu winzigen Körnchen verringert;
• einen fünften Schritt, in dem die Mischung aus winzigen Körnchen und Zusatzkomponenten einem Einspritz/Press-Verfahren zum Erhalten der Kunststoffmaterialteile unterworfen wird;
**dadurch gekennzeichnet, dass** die Abfallstoffe durch ein System gewaschen werden, welches kein Wasser oder andere flüssige Produkte verwendet, wobei Cellulose in hohem Maße verringert wird.

2. Verfahren zum Verarbeiten von Abfallstoffen von Tetra-Pak-Behältern zum Herstellen von Kunststoffteilen nach Anspruch 1, wobei die Zusatzkomponenten die Verwendung von:
• 2 bis 10 % inneren Gleitmitteln, die sich für Polyolefine eignen, wie etwa Metallstearate, Paraffinwachse, Amidwachse, Esterwachse, Fettsäureester und vorzugsweise Polyolefinwachse und stärker bevorzugt Polyethylenwachse,
• Klebstoffpolymeren zwischen dem Aluminium und der Polymermatrix,
umfassen.

3. Verfahren zum Verarbeiten von Abfallstoffen von Tetra-Pak-Behältern zum Herstellen von Kunststoffteilen nach Anspruch 2, wobei die Klebstoffpolymere umfassen:
• Polyethylen, Polypropylenpolymere, die aufgepfropfte polare Gruppen enthalten, oder Mischungen davon;
• Ethylen und Acryl- oder Methacrylsäure-Copolymere;
• Ethylen und Acrylate- oder Acetate-Copolymere;
• Glycidylmethacrylatderivate und
• Styrol-Ethylen-Butadien-Styrol-Copolymere (SEBS-Copolymere), die aufgepfropfte polare Gruppen enthalten.

4. Verfahren zum Verarbeiten von Abfallstoffen von Tetra-Pak-Behältern zum Herstellen von Kunststoffteilen nach einem der Ansprüche 2 oder 3, wobei die Klebstoffpolymere zwischen dem Aluminium und der Polymermatrix einen Anteil zwischen 1 und 5 % erreichen.

5. Verfahren zum Verarbeiten von Abfallstoffen von Tetra-Pak-Behältern zum Herstellen von Kunststoffteilen nach einem der Ansprüche 2 oder 3, wobei die Klebstoffpolymere zwischen dem Aluminium und der Polymermatrix einen Anteil zwischen 2 und 3 % erreichen.

6. Verfahren zum Verarbeiten von Abfallstoffen von Tetra-Pak-Behältern zum Herstellen von Kunststoffteilen nach Anspruch 3, wobei die aufgepfropften polaren Gruppen Maleinsäureanhydrid umfassen.

7. Verfahren zum Verarbeiten von Abfallstoffen von Tetra-Pak-Behältern zum Herstellen von Kunststoffteilen nach Anspruch 3, wobei die aufgepfropften polaren Gruppen Acrylsäure umfassen.

8. Verfahren zum Verarbeiten von Abfallstoffen von Tetra-Pak-Behältern zum Herstellen von Kunststoffteilen nach einem der Ansprüche 3 bis 7, wobei die aufgepfropften polaren Gruppen in einem Anteil von weniger als 15 Gew.-%, bezogen auf das Klebstoffpolymer, vorliegen.

9. Verfahren zum Verarbeiten von Abfallstoffen von Tetra-Pak-Behältern zum Herstellen von Kunststoffteilen nach Anspruch 3, wobei die aufgepfropfte polare Gruppe Maleinsäureanhydrid mit einem Anteil von weniger als 5 Gew.-% des Klebstoffpolymers ist.

10. Verfahren zum Verarbeiten von Abfallstoffen von Tetra-Pak-Behältern zum Herstellen von Kunststoffteilen nach Anspruch 3, wobei die aufgepfropfte polare Gruppe Maleinsäureanhydrid mit einem Anteil von weniger als 3 Gew.-% des Klebstoffpolymers ist.

11. Verfahren zum Verarbeiten von Abfallstoffen von Tetra-Pak-Behältern zum Herstellen von Kunststoffteilen nach Anspruch 3, wobei die aufgepfropfte polare Gruppe Acrylsäure mit einem Anteil von weniger als 7 Gew.-% des Klebstoffpolymers ist.

12. Verfahren zum Verarbeiten von Abfallstoffen von Tetra-Pak-Behältern zum Herstellen von Kunststoffteilen nach einem der Ansprüche 2 bis 11, wobei die Steifigkeit des Klebstoffpolymers durch Zugeben von Polyethylen hoher Dichte (HDPE) zwischen 15 und 50 % verbessert wird, um eine Zunahme des Elastizitätsmoduls des Kunststoffspritzgußteils von 0,2/0,4 GPa bis 0,7/0,9 GPa zu erreichen.

13. Verfahren zum Verarbeiten von Abfallstoffen von Tetra-Pak-Behältern zum Herstellen von Kunststoffteilen nach einem der Ansprüche 2 bis 11, wobei die Steifigkeit des Klebstoffpolymers durch Zugeben von Polyethylen hoher Dichte (HDPE) zwischen 20 und 30 % verbessert wird, um eine Zunahme des Elastizitätsmoduls der spritzgegossenen Teile von 0,2/0,4 GPa bis 0,7/0,9 GPa zu erreichen.

14. Verfahren zum Verarbeiten von Abfallstoffen von Tetra-Pak-Behältern zum Herstellen von Kunststoffteilen nach einem der vorhergehenden Ansprüche, wobei das Einspritz/Press-Verfahren zum Erhalten der Kunststoffmaterialteile umfasst:
• eine erste Stufe, in der das Material in eine offene Form eingespritzt wird, wobei darauf geachtet wird, dass die exakte Menge des Materials für das Kunststoffteil, das erhalten werden soll, eingespritzt wird;
• eine zweite Stufe, in der, sobald das Material eingespritzt worden ist, die Form geschlossen wird und die Formgebung des Kunststoffteils durch Pressen des Materials unter Verwendung der Schließkraft der Maschine beendet wird.

15. Verfahren zum Verarbeiten von Abfallstoffen von Tetra-Pak-Behältern zum Herstellen von Kunststoffteilen nach Anspruch 14, wobei das Material durch einen einzigen Kanal mit einem Materialflussquerschnitt proportional zu dem Gewicht des Teils, das erhalten werden soll, eingespritzt wird.

16. Verfahren zum Verarbeiten von Abfallstoffen von Tetra-Pak-Behältern zum Herstellen von Kunststoffteilen nach Anspruch 1, wobei die aus dem vierten Schritt resultierenden Körnchen eine Größe zwischen 0,1 und 0,6 mm erreichen.

17. Verfahren zum Verarbeiten von Abfallstoffen von Tetra-Pak-Behältern zum Herstellen von Kunststoffteilen nach Anspruch 1, wobei die aus dem vierten Schritt resultierenden Körnchen eine Größe zwischen 0,1 und 0,2 mm erreichen.

18. Verfahren zum Verarbeiten von Abfallstoffen von Tetra-Pak-Behältern zum Herstellen von Kunststoffteilen nach Anspruch 1, wobei die in dem vierten Schritt erwähnte Maschine, welche die Abfallstoffe vermischt und zerkleinert, eine Extrudermaschine ist, deren Extrusionsschnecke einen schneidenden Abschnitt aufweist, welcher die Größe der Abfallstoffe verringert.

19. Verfahren zum Verarbeiten von Abfallstoffen von Tetra-Pak-Behältern zum Herstellen von Kunststoffteilen nach Anspruch 1, wobei die in dem vierten Schritt erwähnte Maschine, welche die Abfallstoffe vermischt und zerkleinert, eine Agglomerationsvorrichtung ist, welche Abfallstoffe mit Größen zwischen 0,5 und 1 mm empfängt.

20. Verfahren zum Verarbeiten von Abfallstoffen von Tetra-Pak-Behältern zum Herstellen von Kunststoffteilen nach Anspruch 1, wobei in einem auf den vierten Schritt folgenden Schritt eine selektive molekulare Exzisionsvorbehandlung angewandt wird, welche den Schmelzindex von 0,5 auf 10 erhöht.

21. Verfahren zum Verarbeiten von Abfallstoffen von Tetra-Pak-Behältern zum Herstellen von Kunststoffteilen nach Anspruch 20, wobei die selektive molekulare Exzisionsvorbehandlung durch einen dynamischen Kavitationsmischer ausgeführt wird.

22. Verfahren zum Verarbeiten von Abfallstoffen von Tetra-Pak-Behältern zum Herstellen von Kunststoffteilen nach Anspruch 1, wobei das in dem ersten Schritt beschriebene Waschsystem aus Heißluftströmen besteht.

## Revendications

1. Procédé de traitement, en vue de la fabrication de pièces en matière plastique, de déchets d'emballages Tetra-Pak qui comprennent approximativement 4 % de cellulose, 78 % de polyéthylène basse densité (PEbd) et 18 % d'aluminium, lequel procédé comprend :
- une première étape au cours de laquelle les déchets sont lavés,
- une deuxième étape au cours de laquelle les déchets lavés sont réduits en fragments de petite taille,
- une troisième étape au cours de laquelle divers adjuvants nécessaires pour les étapes ultérieures sont ajoutés aux fragments de déchets,
- une quatrième étape de granulation, au cours de laquelle le mélange est homogénéisé à l'aide d'une machine qui réduit la taille des fragments de déchets jusqu'à en faire de fins granules,
- et une cinquième étape au cours de laquelle le mélange de fins granules et d'adjuvants est soumis à un procédé d'injection et compression, pour donner les pièces en matière plastique,
et lequel procédé est **caractérisé en ce que** les déchets sont lavés dans un système où l'on n'utilise pas d'eau ou d'autres produits liquides et où l'on fait baisser dans une grande mesure la proportion de cellulose.

2. Procédé de traitement, en vue de la fabrication de pièces en matière plastique, de déchets d'emballages Tetra-Pak, conforme à la revendication 1, dans lequel les adjuvants utilisés comprennent :
- de 2 à 10 % de lubrifiants internes appropriés pour des polyoléfines, tels des stéarates de métal, des cires de paraffine, des cires d'amide, des cires d'ester, des esters d'acide gras ou, de préférence, des cires de polyoléfine, et mieux encore des cires de polyéthylène,
- et des polymères adhésifs assurant l'adhérence entre l'aluminium et la matrice polymère.

3. Procédé de traitement, en vue de la fabrication de pièces en matière plastique, de déchets d'emballages Tetra-Pak, conforme à la revendication 2, dans lequel les polymères adhésifs comprennent :
- des polymères de type polyéthylène ou polypropylène, portant des groupes polaires greffés, ou des mélanges de tels polymères,
- des copolymères d'éthylène et d'acide acrylique ou méthacrylique,
- des copolymères d'éthylène et d'acétates ou d'acrylates,
- des dérivés du méthacrylate de glycidyle,
- et des copolymères SEBS (styrène/éthylène-butadiène/styrène) portant des groupes polaires greffés.

4. Procédé de traitement, en vue de la fabrication de pièces en matière plastique, de déchets d'emballages Tetra-Pak, conforme à la revendication 2 ou 3, dans lequel les polymères adhésifs assurant l'adhérence entre l'aluminium et la matrice polymère sont utilisés en une proportion de 1 à 5 %.

5. Procédé de traitement, en vue de la fabrication de pièces en matière plastique, de déchets d'emballages Tetra-Pak, conforme à la revendication 2 ou 3, dans lequel les polymères adhésifs assurant l'adhérence entre l'aluminium et la matrice polymère sont utilisés en une proportion de 2 à 3 %.

6. Procédé de traitement, en vue de la fabrication de pièces en matière plastique, de déchets d'emballages Tetra-Pak, conforme à la revendication 3, dans lequel les groupes polaires greffés comprennent des groupes dérivés de l'anhydride maléique.

7. Procédé de traitement, en vue de la fabrication de pièces en matière plastique, de déchets d'emballages Tetra-Pak, conforme à la revendication 3, dans lequel les groupes polaires greffés comprennent des groupes dérivés de l'acide acrylique.

8. Procédé de traitement, en vue de la fabrication de pièces en matière plastique, de déchets d'emballages Tetra-Pak, conforme à l'une des revendications 3 à 7, dans lequel les groupes polaires greffés représentent moins de 15 % du poids du polymère adhésif.

9. Procédé de traitement, en vue de la fabrication de pièces en matière plastique, de déchets d'emballages Tetra-Pak, conforme à la revendication 3, dans lequel les groupes polaires greffés sont des groupes dérivés de l'anhydride maléique et représentent moins de 5 % du poids du polymère adhésif.

10. Procédé de traitement, en vue de la fabrication de pièces en matière plastique, de déchets d'emballages Tetra-Pak, conforme à la revendication 3, dans lequel les groupes polaires greffés sont des groupes dérivés de l'anhydride maléique et représentent moins de 3 % du poids du polymère adhésif.

11. Procédé de traitement, en vue de la fabrication de pièces en matière plastique, de déchets d'emballages Tetra-Pak, conforme à la revendication 3, dans lequel les groupes polaires greffés sont des groupes dérivés de l'acide acrylique et représentent moins de 7 % du poids du polymère adhésif.

12. Procédé de traitement, en vue de la fabrication de pièces en matière plastique, de déchets d'emballages Tetra-Pak, conforme à l'une des revendications 2 à 11, dans lequel on améliore la rigidité du polymère adhésif en ajoutant un polyéthylène haute densité (PEhd), en une proportion de 15 à 50 % en poids, pour que le module élastique des pièces en matière plastique obtenues après moulage par injection augmente, depuis une valeur de 0,2 à 0,4 GPa, jusqu'à une valeur de 0,7 à 0,9 GPa.

13. Procédé de traitement, en vue de la fabrication de pièces en matière plastique, de déchets d'emballages Tetra-Pak, conforme à l'une des revendications 2 à 11, dans lequel on améliore la rigidité du polymère adhésif en ajoutant un polyéthylène haute densité (PEhd), en une proportion de 20 à 30 % en poids, pour que le module élastique des pièces obtenues après moulage par injection augmente, depuis une valeur de 0,2 à 0,4 GPa, jusqu'à une valeur de 0,7 à 0,9 GPa.

14. Procédé de traitement, en vue de la fabrication de pièces en matière plastique, de déchets d'emballages Tetra-Pak, conforme à l'une des revendications précédentes, dans lequel les opérations d'injection et de compression permettant d'obtenir des pièces en matière plastique comprennent :
- un premier stade dans lequel on injecte la matière dans un moule ouvert en veillant à injecter l'exacte quantité de matière nécessaire pour la pièce en matière plastique à fabriquer,
- et un deuxième stade dans lequel, une fois la matière injectée, on ferme le moule et l'on termine le moulage de la pièce en matière plastique par compression de la matière au moyen de la force de fermeture de la machine.

15. Procédé de traitement, en vue de la fabrication de pièces en matière plastique, de déchets d'emballages Tetra-Pak, conforme à la revendication 14, dans lequel on injecte la matière en la faisant passer par un conduit unique où la section transversale de l'écoulement de matière est proportionnelle au poids de la pièce à fabriquer.

16. Procédé de traitement, en vue de la fabrication de pièces en matière plastique, de déchets d'emballages Tetra-Pak, conforme à la revendication 1, dans lequel la taille des granules résultant de la quatrième étape vaut de 0,1 à 0,6 mm.

17. Procédé de traitement, en vue de la fabrication de pièces en matière plastique, de déchets d'emballages Tetra-Pak, conforme à la revendication 1, dans lequel la taille des granules résultant de la quatrième étape vaut de 0,1 à 0,2 mm.

18. Procédé de traitement, en vue de la fabrication de pièces en matière plastique, de déchets d'emballages Tetra-Pak, conforme à la revendication 1, dans lequel la machine, mentionnée à propos de la quatrième étape, qui mélange les déchets et en réduit la taille est une extrudeuse dont la vis d'extrusion comporte une section de découpe où est réduire la taille des déchets.

19. Procédé de traitement, en vue de la fabrication de pièces en matière plastique, de déchets d'emballages Tetra-Pak, conforme à la revendication 1, dans lequel la machine, mentionnée à propos de la quatrième étape, qui mélange les déchets et en réduit la taille est un appareil d'agglomération qui peut recevoir des déchets de 0,5 à 1 mm de taille.

20. Procédé de traitement, en vue de la fabrication de pièces en matière plastique, de déchets d'emballages Tetra-Pak, conforme à la revendication 1, dans lequel, au cours d'une étape postérieure à la quatrième étape, on effectue un pré-traitement sélectif d'excision moléculaire grâce auquel l'indice de fluidité à chaud augmente de 0,5 à 10.

21. Procédé de traitement, en vue de la fabrication de pièces en matière plastique, de déchets d'emballages Tetra-Pak, conforme à la revendication 20, dans lequel le pré-traitement sélectif d'excision moléculaire est effectué dans un mélangeur dynamique à cavitation.

22. Procédé de traitement, en vue de la fabrication de pièces en matière plastique, de déchets d'emballages Tetra-Pak, conforme à la revendication 1, dans lequel le système de lavage utilisé dans la première étape est constitué de courants d'air chaud.
